(19) **Europäisches Patentamt / European Patent Office / Office européen des brevets**

(11) **EP 4 657 148 A1**

(12) **EUROPEAN PATENT APPLICATION**

(43) Date of publication:
**03.12.2025   Bulletin 2025/49**

(51) International Patent Classification (IPC):
**G02F 1/11** (2006.01)        **H01S 3/00** (2006.01)
**G02F 1/33** (2006.01)

(21) Application number: **24305858.3**

(22) Date of filing: **30.05.2024**

(52) Cooperative Patent Classification (CPC):
**G02F 1/113; G02F 1/33; H01S 3/0085**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Pasqal**
**91300 Massy (FR)**

(72) Inventors:
• **SILVERIO, Henrique Guimarães**
  **91300 MASSY (FR)**
• **MERIAUX, Guillaume**
  **91300 MASSY (FR)**

(74) Representative: **Lavoix**
**2, place d'Estienne d'Orves**
**75441 Paris Cedex 09 (FR)**

(54) **A DEVICE FOR MODULATING A LASER BEAM IN A QUANTUM SYSTEM**

(57)    The present invention relates to a device (20) for modulating a laser beam in a quantum system, the device (20) comprising:
- a modulator (30) suitable to modulate a laser beam as a function of a radio frequency signal received by the modulator (30) so as to obtain a modulated laser beam, and
- a programmable electronic component (32) suitable to generate the radio frequency signal as a function of a desired modulation for the modulated laser beam, the generated radio frequency signal having tunable parameters comprising at least the amplitude and the phase of the radio frequency signal, the programmable electronic component (32) being suitable to independently set the tunable parameters of the radio frequency signal, so that the modulated laser beam be a continuous laser beam having the desired modulation and a continuous phase.

FIG.2

EP 4 657 148 A1

**Description**

TECHNICAL FIELD OF THE INVENTION

The present invention concerns a device for modulating a laser beam in a quantum system. The present invention also deals with an associated processing apparatus. The present invention also concerns an associated quantum system.

BACKGROUND OF THE INVENTION

In the field of neutral atom-based quantum computing processors (QPUs), the quantum state of individual atoms (acting as qubits) can be manipulated using modulated laser light.
To modulate the light that reaches the atoms, it is common to rely on modulators such as Acoustic-Optic Modulators (AOMs) or Acousto-Optic Deflectors (AOD).
Such modulators modulate the laser light passing through them based on the properties of an incoming radio frequency (RF) signal controlling the modulators. In particular, to have arbitrary control over the amplitude, frequency and phase of the laser light reaching the atoms, one needs to generate RF signals with arbitrary amplitude, frequency and phase profiles.
Different solutions for generating this RF signal have been proposed such as using a quantum controller (for example the OPX electronic controller from Quantum Machines) or a RF signal generator (for example one from Moglabs).
However, the RF signal generated with such systems has instabilities, especially discontinuities or phase jumps, which induces instabilities in the modulated laser light. This renders the modulated laser beam not suitable to be used with other components of the quantum processor, such as an optical amplifier.

SUMMARY OF THE INVENTION

Hence, there exists a need for a way of generating a radio frequency signal with reduced instabilities, so as to better control a modulator in a quantum system.
To this end, the invention relates to a device for modulating a laser beam in a quantum system, the device comprising:

- a modulator suitable to modulate a laser beam as a function of a radio frequency signal received by the modulator so as to obtain a modulated laser beam, and
- a programmable electronic component suitable to generate the radio frequency signal as a function of a desired modulation for the modulated laser beam, the generated radio frequency signal having tunable parameters comprising at least the amplitude and the phase of the radio frequency signal, the programmable electronic component being suitable to independently set the tunable parameters of the radio frequency signal, so that the modulated laser beam be a continuous laser beam having the desired modulation and a continuous phase.

The device according to the invention may comprise one or more of the following features considered alone or in any combination that is technically possible:

- the tunable parameters also comprise the frequency of the radio frequency signal;
- the programmable electronic component is suitable to set the amplitude of the radiofrequency signal at a value different from zero;
- the modulator is chosen among: an acousto-optic modulator and an acousto-optic deflector;
- the programmable electronic component is chosen among: a Field-Programmable Gate Array and an Application-Specific Integrated Circuit;
- the programmable electronic component has a so-called real-time mode for setting each tunable parameter, the desired modulation defining a target value for each tunable parameter and a step for each tunable parameter, the real time mode consisting in, for each tunable parameter:

  • bringing, at each clock cycle, the current value of the tunable parameter one step closer to the target value, and
  • once the current value reaches the target value, setting the tunable parameter at the target value until the target value is modified;

- the step for the phase of the radiofrequency signal is different from zero;
- the programmable electronic component has a so-called memory mode for setting each tunable parameter, the desired modulation defining arbitrary waveforms for at least the amplitude and the phase of the radio frequency signal, the arbitrary waveforms being stored in a memory, the memory mode consisting in modulating each tunable parameter according to a corresponding arbitrary waveform stored in the memory;
- the programmable electronic component is switchable between the real time mode and the memory mode;
- for each tunable parameter, when the programmable electronic component is switched from the memory mode to the real time mode, the last value read in the memory for the arbitrary waveform of each tunable parameter is taken as the current value for such a tunable parameter;
- the arbitrary waveforms of the tunable parameters stored in the memory are reprogrammable while the programmable electronic component (32) is in the real time mode;
- the radio frequency signal generated by the programmable electronic component is described by the following equation:

$$s(t) = A(t)B(\int_0^t \omega(\tau)d\tau + \phi_0(t))$$

Where:

- $s(t)$ is the radio frequency signal,
- $A(t)$ is the amplitude of $s(t)$,
- $\omega(t)$ is the frequency of $s(t)$,
- $\phi_0(t)$ is the phase of $s(t)$, and
- B( ) is the function cosine or sine;

- the modulator is suitable to modulate at least the frequency of the laser beam. The invention also deals with a processing apparatus comprising:
- a device as previously described.
- an amplifier suitable for amplifying the modulated laser beam so as to obtain an amplified laser beam.

The invention also deals with a quantum system comprising:

- a generator of an array of qubits,
- a laser source suitable for generating a laser beam intended to interact with at least one qubit of the array of qubits, and
- a processing apparatus for processing the laser beam generated by the laser source before the laser beam reaches the array of qubits, the processing apparatus as previously described.

BRIEF DESCRIPTION OF THE DRAWINGS

The invention will be easier to understand in view of the following description, provided solely as an example and with reference to the appended drawings in which:

- Figure 1 is a schematic view of an example of a quantum system comprising a generator of an array of qubits, a laser source suitable for generating a laser beam and a processing apparatus for processing the laser beam generated by the laser source before the laser beam reaches the array of qubits,
- Figure 2 is a schematic view of an example of the processing apparatus of figure 1, the processing apparatus comprising a device for modulating the laser beam generated by the laser source of figure 1,
- Figure 3 is an example of a configuration of a programmable electronic component of the device of figure 2, which enables to obtain a radio frequency signal having tunable parameters which are set independently by the programmable electronic component,
- Figure 4 is an example of waveforms modulation for the amplitude (top curve) and the frequency shift/detuning (bottom curve) for the radio frequency signal, these waveforms being processed and then stored in a memory of the programmable electronic component, and
- Figure 5 is an example of effective modulations of the radiofrequency signal which have been obtained starting from the stored waveforms modulations of figure 4, the effective modulations having been applied from the stored modulations according to the desired modulation for the laser signal (4 different curves from top to bottom corresponding to 4 different desired modulations for the laser signal).

DETAILED DESCRIPTION OF SOME EMBODIMENTS

In the description, the terms "suitable for", "able to" and "configured for" are considered equivalent.

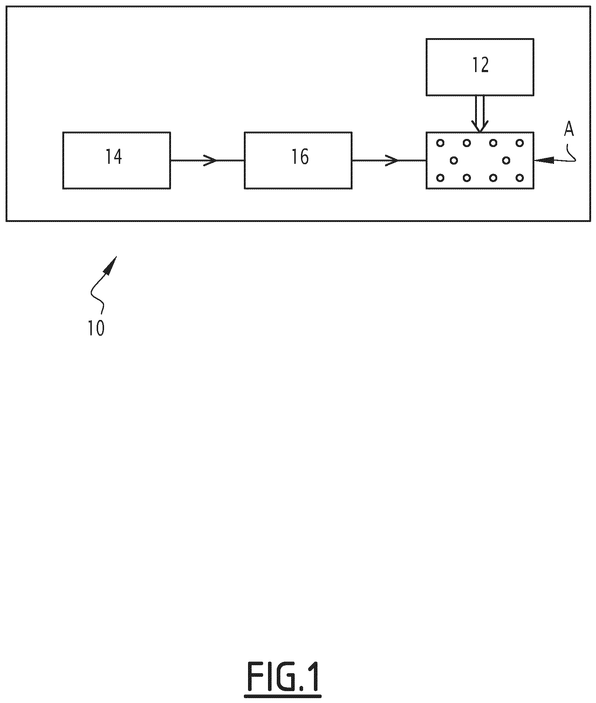

An example of a quantum system 10 is schematically illustrated on figure 1.

The quantum system 10 is, for example, a quantum computing device (or quantum processing unit), a quantum sensor, a quantum communication device or any quantum device comprising an array of qubits.

Typically, the quantum system 10 uses the quantum properties of matter, such as superposition and entanglement, to perform operations on data. Unlike a classical computer based on transistors working on binary data (coded on bits, 0 or 1), the quantum computing device works on qubits whose quantum state can take a continuous rather than discrete number of values.

In particular, a qubit refers to a two-level quantum mechanical system. For example, a qubit comprises two basic quantum states |0> and I1> representing the possible quantum states of the qubit. According to the superposition principle of quantum mechanics, any superposition of the form al0> + bl1> (a and b being complex numbers and aa*+bb*=1) is a possible quantum state of the qubit.

As illustrated on figure 1, the quantum system 10 comprises a generator 12 to create an array of qubits A, at least a laser source 14 and a processing apparatus 16 for processing the laser beam generated by the laser source 14.

Preferably, the qubits of the array of qubits A are particles such as neutral atoms. Preferably, the neutral atom particles are Rubidium atoms, although other elements are possible, such as Strontium atoms, Cesium atoms, or any alkali metal or alkaline earth element.

However, in other embodiments, the invention could be used with other optically addressable qubits or particles such as: Nitrogen-Vacancy centers, Silicon-Vacancy centers, ions, molecules and quantum dots.

In an example of implementation, the generator 12 of an array of qubits A comprises a source of particles, a generator of trapping sites for particles, a detector, and a rearrangement unit (optional). Other embodiments are nonetheless possible.

In the case of neutral atoms, the source of particles comprises a vacuum chamber in which the particles are located. In particular, during use, a vacuum is created in the vacuum chamber, a dilute atomic vapor is formed in the vacuum chamber. Various cooling processes can be used to cool the dilute atomic vapor, for instance laser cooling, so that the atoms can be trapped. Other embodiments are nonetheless possible.

The generator of trapping sites is able to generate a laser beam which when focused generates an array of trapping sites for particles (e.g., optical tweezers).

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused. The beam shaper is, for example, a spatial light modulator (SLM).

The particles trapped in the array of trapping sites form an array of qubits A.

The detector is configured to detect the presence of particle(s) in the trapping sites (forming a qubit register). The detector is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The rearrangement unit (optional) is configured for moving particles from one trapping site to another trapping site. The rearrangement unit comprises a generator of optical moving tweezers. The generator of optical moving tweezers comprises a laser source or equivalent, able to generate a laser beam and a beam shaper able to shape the laser beam (e.g., to impart a specific intensity pattern to the laser beam) so as to obtain an array of optical moving tweezers for particles P when the laser beam is focused. The beam shaper is, for example, a spatial light modulator (SLM).

Examples of quantum processors based on neutral atoms are described in the article of Loïc Henriet, Lucas Beguin, Adrien Signoles, Thierry Lahaye, Antoine Browaeys, Georges-Olivier Reymond, and ChristopheJurczak, "Quantum computing with neutral atoms". Quantum, 4:327, September 2020. ISSN 2521-327X. doi:10.22331/q-2020-09-21-327. Other embodiments are nonetheless possible.

The laser source 14 is suitable for generating a laser beam intended to interact with at least one qubit of the array of qubits A.

For example, the laser source 14 is one laser source of the rearrangement unit whose laser beam enables to form at least one moving optical tweezer. The moving optical tweezer can then be used to rearrange qubits in the array of qubits A.

In another example, the laser beam generated by the laser source 14 is suitable to modify the quantum states of qubit(s) of the array of qubits A, for example to excite qubits from one state to another.

The processing apparatus 16 is suitable for processing the laser beam generated by the laser source 14 before the laser beam reaches the array of qubits A. The processing enables to impart a property, such as a modulation (e.g., a phase modulation, an amplitude modulation, a frequency modulation, or the like), on the laser beam. In addition, the processing might also comprise a deflection of the laser beam.

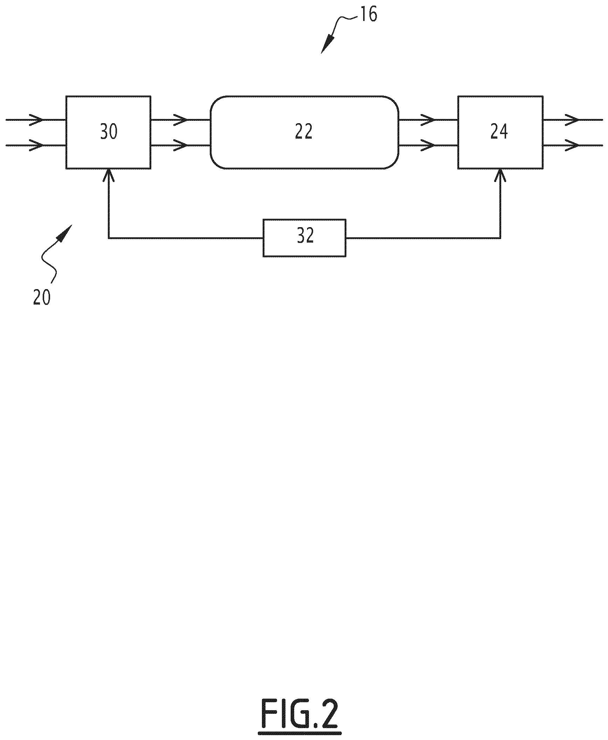

In an example of implementation, as illustrated on figure 2, the processing apparatus 16 comprises a device 20 for modulating the laser beam generated by the laser source 14 and an amplifier 22. Optionally, the processing apparatus 16 comprises also one or several additional modulators 24 after the amplifier 22.

In a variant, instead of the amplifier 22, the processing apparatus 16 comprises any other module suitable to process a continuous laser beam having a continuous phase.

The device 20 is suitable for receiving the laser beam generated by the laser source 14 and to output a modulated laser beam.

The device 20 comprises a modulator 30 and a programmable electronic component 32.

The modulator 30 is suitable to modulate the laser beam generated by the laser source 14 as a function of a radio frequency signal received by the modulator 30 so as to obtain a modulated laser beam.

Preferably, the modulator 30 is suitable to modulate at least the frequency of the laser beam. In addition or in a variant, the modulator 30 is suitable to modulate the amplitude and/or the phase of the laser beam.

In a preferred embodiment, the modulator 30 is chosen among: an acousto-optic modulator (AOM) and an acousto-optic deflector (AOD).

The programmable electronic component 32 is suitable to generate the radio frequency signal as a function of a desired modulation for the modulated laser beam.

The programmable electronic component 32 is suitable to directly send (without intermediate components) the generated radio frequency signal to the modulator 30.

The desired modulation comprises information about the modulation in amplitude, phase or frequency desired for the laser beam generated by the laser source 14.

The desired modulation is for example received under the form of a command by the programmable electronic component 32. The command is for example sent by a classical computer or by an operator.

The generated radio frequency signal has tunable parameters comprising at least the amplitude and the phase of the radio frequency signal.

Preferably, the tunable parameters also comprise the frequency of the radio frequency signal.

In a variant, the phase and the frequency are dependent on each other. For example, the contribution in the phase can be taken into account by separating the frequency into a constant and a time-dependent component.

The programmable electronic component 32 is suitable to independently set the tunable parameters of the radio frequency signal, so that the modulated laser beam be a continuous laser beam having the desired modulation and a continuous phase. By "independently", it is understood that the tunable parameters are set without influencing each other.

The programmable electronic component 32 is suitable to set the tunable parameters arbitrarily, which means in a way that is chosen by the programmable electronic component 32.

Preferably, the programmable electronic component 32 is suitable to set the amplitude of the radio frequency signal at a value different from zero. This enables to always have a signal reaching the modulator 30.

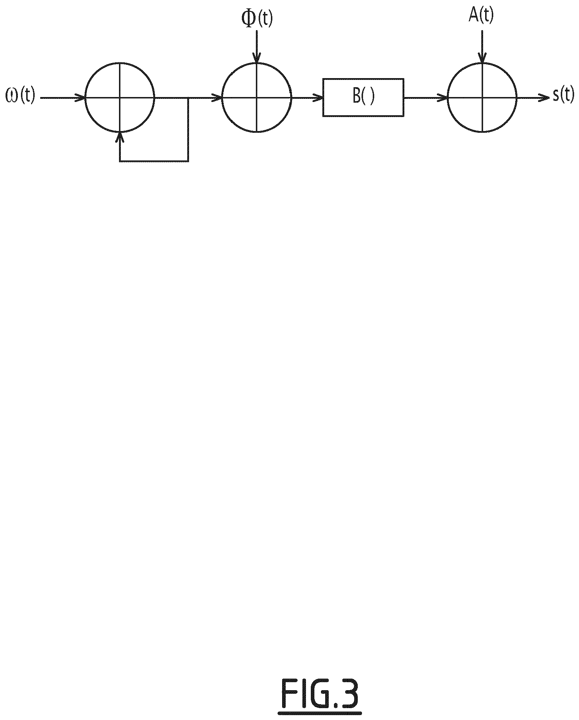

Preferably, the radio frequency signal generated by the programmable electronic component 32 is the product of the amplitude A(t) of the radio frequency signal by a function B depending on the phase and the frequency of the radio frequency signal. An example of an implementation of the radio frequency signal is illustrated on figure 3.

Preferably, the radio frequency signal generated by the programmable electronic component 32 is described by the following equation:

$$s(t) = A(t)B(\int_0^t \omega(\tau)d\tau + \phi_0(t)) \qquad (1)$$

Where:

- $s(t)$ is the radio frequency signal,
- $A(t)$ is the amplitude of $s(t)$,
- $\omega(t)$ is the frequency of $s(t)$,
- $\phi_0(t)$ is the phase of $s(t)$, and
- B( ) is the function cosine or sine.

Preferably, the programmable electronic component 32 has a so-called real-time mode for setting each tunable parameter. The desired modulation defines a target value for each tunable parameter and a step (or quantity) for each tunable parameter. The real time mode consists in, for each tunable parameter:

- bringing, at each clock cycle, the current value of the tunable parameter one step closer to the target value, and
- once the current value reaches the target value, setting the tunable parameter at the target value until the target value is modified.

The real-time mode is typically the default mode of the programmable electronic component 32.

In this example, the target value for the amplitude of the radiofrequency signal is advantageously different from zero. This enables to always have a signal reaching the modulator 30.

In this example, the step for the phase of the radiofrequency signal is advantageously different from zero. This enables to have a phase-continuous signal that smoothly ramps back to its base value at the end of every run.

Preferably, the programmable electronic component 32 has a so-called memory mode for setting each tunable parameter. The desired modulation defines arbitrary waveforms for at least the amplitude and the phase of the radio frequency signal. The arbitrary waveforms are stored in a memory of the programmable electronic component 32. The memory mode consists in modulating each tunable parameter according to a corresponding arbitrary waveform stored in the memory.

The memory mode enables to dynamically adjust the amplitude of the frequency-modulated signal by simply programing an appropriate waveform in the amplitude memory.

In particular, an independent memory for the frequency is not required because the contribution of the frequency can be included in the phase waveform by dividing the frequency between a constant $\omega_0$ and a time-dependent component $\delta(t)$ as described hereinafter:

$$\omega(t) = \omega_0 + \delta(t) \qquad (2)$$

As such, the radio frequency signal of equation (1) can be rewritten the following way:

$$s(t) = A(t)B\big(\omega_0 t + \phi(t)\big) \qquad (3)$$

With:

$$\phi(t) = \int_0^t \delta(\tau)d\tau + \phi_0(t)$$

This shows that the time-dependent frequency component can be fully incorporated into the phase waveform.

Preferably, the arbitrary waveforms for the phase are continuous. This enables to have a phase-continuous radio frequency signal.

Preferably, the programmable electronic component 32 is switchable between the real time mode and the memory mode. For example, the switching is controlled by a command received by the programmable electronic component 32. For example, the command is generated automatically depending on the type of modulation to be performed or by a user.

Preferably, for each tunable parameter, when the programmable electronic component 32 is switched from the memory mode to the real time mode, the last value read in the memory for the arbitrary waveform of each tunable parameter is taken as the current value for such a tunable parameter. This allows to execute either a smooth or immediate transition back to the target value.

Preferably, the arbitrary waveforms of the tunable parameters stored in the memory are reprogrammable while the programmable electronic component 32 is in the real time mode. This enables to never lose or disturb the radio frequency signal.

In an example of implementation, the programmable electronic component 32 is chosen among: a Field-Programmable Gate Array (FPGA) and an Application-Specific Integrated Circuit (ASIC). In particular, a FPGA is preferable because it can be bought off-the-shelf and programmed, while an ASIC has to be designed and manufactured according to application-specific specifications. The amplifier 22 is suitable to amplify the modulated laser beam.

The additional modulator(s) 24 is/are for example an acousto-optic modulator (AOM), an acousto-optic deflector (AOD) or an electro-optic modulator (EOM). In an example, the additional modulator(s) 24 is/are also controlled by the programmable electronic component 32.

A method for modulating a laser beam using the device 20 described above will now be described.

Following the reception of a desired modulation for modulating a laser beam generated by a laser source 14, the programmable electronic component 32 sets the tunable parameters of a radio frequency signal so that the modulated laser beam be a continuous laser beam having the desired modulation and a continuous phase. Such a radio frequency signal is then generated by the programmable electronic component 32.

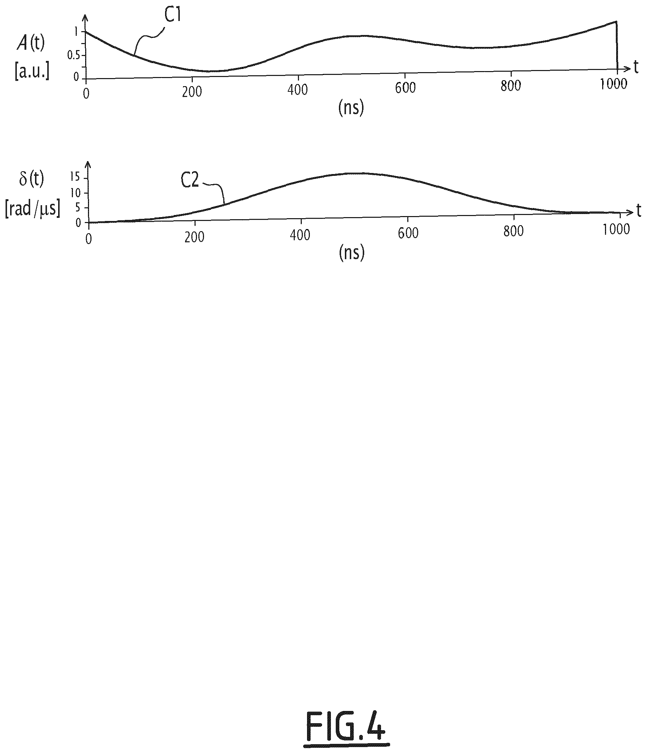

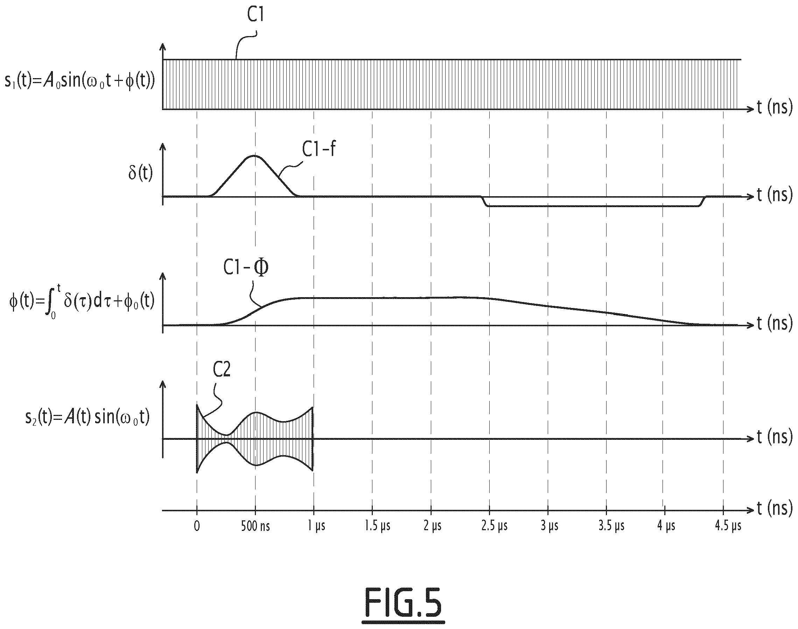

Examples of radiofrequency signals are illustrated on figures 4 and 5.

In particular, figure 4 illustrates two examples of waveforms modulations for the amplitude (top curve) and the frequency shift/detuning (bottom curve) of the radio frequency signal, which are processed and stored in a memory of the programmable electronic component 32. On this figure, the frequency modulation is represented as a detuning around a central frequency. The programming is done such that the curve C2 takes care of the frequency and phase modulation, while C1 takes care of the amplitude modulation.

Figure 5 illustrates examples of effective modulations of the radiofrequency signal which have been obtained starting from the stored waveforms modulations of figure 4. The effective modulations have been applied from the stored modulations according to the desired modulation for the laser signal. Hence, the 4 different curves from top to bottom correspond to 4 different desired modulations for the laser signal. In particular, the curve C1 of figure 5 corresponds to a signal of constant amplitude and time-dependent frequency and phase. On the curve C1-f, we see the detuning of the signal, which matches the programmed waveform. On the curve C1-Φ, we see how the phase stays for a while at the value it reaches at t=1000 ns (the end of the program) and then gradually ramps back down to its initial value; in this way, the phase is always continuous over a complete cycle. Concerning the curve C2, we have a signal of time-dependent amplitude, but constant frequency and phase. We observe how the amplitude of the RF signal is modulated according to the programmed waveform and, in this case, is zero otherwise, resulting in no signal output outside of program execution.

The radio frequency signal is then sent to the modulator 30 which modulates the laser beam received by the modulator 30 as a function of the radio frequency signal so as to obtain a modulated laser beam. Because of the properties of the radio frequency signal, the modulated laser beam is a continuous laser beam having the desired modulation and a continuous phase.

If applicable, the modulated laser beam is then sent to the amplifier 22 to be amplified and/or to the additional modulator(s) 24 to be further modulated. Hence, the device 20 described above enables to generate a radio frequency signal whose amplitude, phase, and if applicable frequency, can be set independently. This enables to better control the generation of the radio frequency signal, and thus to reduce instabilities. This radio frequency signal with reduced instabilities enables to better control a modulator in a quantum system.

**Claims**

1. A device (20) for modulating a laser beam in a quantum system (10), the device (20) comprising:

   - a modulator (30) suitable to modulate a laser beam as a function of a radio frequency signal received by the modulator (30) so as to obtain a modulated laser beam, and
   - a programmable electronic component (32) suitable to generate the radio frequency signal as a function of a desired modulation for the modulated laser beam, the generated radio frequency signal having tunable parameters comprising at least the amplitude and the phase of the radio frequency signal, the programmable electronic component (32) being suitable to independently set the tunable parameters of the radio frequency signal, so that the modulated laser beam be a continuous laser beam having the desired modulation and a continuous phase.

2. A device (20) according to claim 1, wherein the tunable parameters also comprise the frequency of the radio frequency signal.

3. A device (20) according to claim 1 or 2, wherein the programmable electronic component (32) is suitable to set the amplitude of the radiofrequency signal at a value different from zero.

4. A device (20) according to any one of claims 1 to 3, wherein the modulator (30) is chosen among: an acousto-optic modulator and an acousto-optic deflector.

5. A device (20) according to any one of claims 1 to 4, wherein the programmable electronic component (32) is chosen among: a Field-Programmable Gate Array and an Application-Specific Integrated Circuit.

6. A device (20) according to any one of claims 1 to 5, wherein the programmable electronic component (32) has a so-called real-time mode for setting each tunable parameter, the desired modulation defining a target value for each tunable parameter and a step for each tunable parameter, the real time mode consisting in, for each tunable parameter:

   • bringing, at each clock cycle, the current value of the tunable parameter one step closer to the target value, and
   • once the current value reaches the target value, setting the tunable parameter at the target value until the target value is modified.

**7.** A device (20) according to claim 6, wherein the step for the phase of the radiofrequency signal is different from zero.

**8.** A device (20) according to any one of claims 1 to 7, wherein the programmable electronic component (32) has a so-called memory mode for setting each tunable parameter, the desired modulation defining arbitrary waveforms for at least the amplitude and the phase of the radio frequency signal, the arbitrary waveforms being stored in a memory, the memory mode consisting in modulating each tunable parameter according to a corresponding arbitrary waveform stored in the memory.

**9.** A device (20) according to claim 8 in its dependence with claim 6 or 7, wherein the programmable electronic component (32) is switchable between the real time mode and the memory mode.

**10.** A device (20) according to claim 9, wherein for each tunable parameter, when the programmable electronic component (32) is switched from the memory mode to the real time mode, the last value read in the memory for the arbitrary waveform of each tunable parameter is taken as the current value for such a tunable parameter.

**11.** A device (20) according to claim 9 or 10, wherein the arbitrary waveforms of the tunable parameters stored in the memory are reprogrammable while the programmable electronic component (32) is in the real time mode.

**12.** A device (20) according to any one of claims 1 to 11, wherein the radio frequency signal generated by the programmable electronic component (32) is described by the following equation:

$$s(t) = A(t)B\left(\int_0^t \omega(\tau)d\tau + \phi_0(t)\right)$$

Where:

- $s(t)$ is the radio frequency signal,
- $A(t)$ is the amplitude of $s(t)$,
- $\omega(t)$ is the frequency of $s(t)$,
- $\phi_0(t)$ is the phase of $s(t)$, and
- B( ) is the function cosine or sine.

**13.** A device (20) according to any one of claims 1 to 12, wherein the modulator (30) is suitable to modulate at least the frequency of the laser beam.

**14.** A processing apparatus (16) comprising:

- a device (20) according to any one of claims 1 to 13, and
- an amplifier (22) suitable for amplifying the modulated laser beam so as to obtain an amplified laser beam.

**15.** A quantum system (10) comprising:

- a generator (12) of an array of qubits (A),
- a laser source (14) suitable for generating a laser beam intended to interact with at least one qubit of the array of qubits (A), and
- a processing apparatus (16) for processing the laser beam generated by the laser source (14) before the laser beam reaches the array of qubits (A), the processing apparatus (16) being according to claim 14.

FIG.1

FIG.2

$$\text{FIG.3}$$

FIG.4

EP 4 657 148 A1

FIG.5

## EUROPEAN SEARCH REPORT

| | | Application Number |
| --- | --- | --- |
| | | EP 24 30 5858 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2023/080936 A2 (HARVARD COLLEGE [US]; MASSACHUSETTS INST TECHNOLOGY [US]) 11 May 2023 (2023-05-11) | 1-4,6-15 | INV. G02F1/11 H01S3/00 |
| Y | * paragraph [0049] - paragraph [0052] * * paragraph [0054] * * paragraph [0065] * * paragraph [0109] - paragraph [0110] * * paragraph [0137] - paragraph [0139] * * figures 1, 3A, 3B, 4A, 6 * | 5 | G02F1/33 |
| | ----- | | |
| Y | US 11 757 532 B1 (LE KHANH [US] ET AL) 12 September 2023 (2023-09-12) * column 1, line 33 - line 43 * * paragraph [0075] * | 5 | |
| | ----- | | |
| A | Rasta Kins: "Frequency modulation - Wikipedia", , 30 March 2024 (2024-03-30), pages 1-7, XP093215315, Retrieved from the Internet: URL:https://batavia.internal.epo.org/citen pl/citation/prod/pdf/df6e0b9a-04f7-3820-b6 ec-30d68cc4b002.pdf [retrieved on 2024-10-15] | 12 | |
| | ----- | | TECHNICAL FIELDS SEARCHED (IPC) |
| A | US 2016/306200 A1 (GOEDERS JAMES [US] ET AL) 20 October 2016 (2016-10-20) * paragraph [0010] - paragraph [0012] * * paragraph [0023] * * paragraph [0033] - paragraph [0037] * | 1-15 | G02F H01S |
| | ----- | | |
| A | US 11 797 873 B2 (ATOM COMPUTING INC [US]) 24 October 2023 (2023-10-24) * figures 1-18C * | 1-15 | |
| | ----- | | |
| A | US 10 101 600 B2 (FLIR SYSTEMS [US]) 16 October 2018 (2018-10-16) * figures 1-3 * | 1-15 | |
| | ----- | | |

The present search report has been drawn up for all claims

| Place of search | Date of completion of the search | Examiner |
| --- | --- | --- |
| The Hague | 16 October 2024 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5858

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2024

| Patent document cited in search report | | Publication date | Patent family member(s) | | Publication date |
|---|---|---|---|---|---|
| WO 2023080936 | A2 | 11-05-2023 | CA | 3223061 A1 | 11-05-2023 |
| | | | EP | 4371042 A2 | 22-05-2024 |
| | | | JP | 2024526731 A | 19-07-2024 |
| | | | WO | 2023080936 A2 | 11-05-2023 |
| US 11757532 | B1 | 12-09-2023 | US | 11757532 B1 | 12-09-2023 |
| | | | US | 11885949 B1 | 30-01-2024 |
| | | | US | 11906874 B1 | 20-02-2024 |
| | | | US | 11984695 B1 | 14-05-2024 |
| | | | US | 11999009 B1 | 04-06-2024 |
| | | | US | 12107381 B1 | 01-10-2024 |
| | | | US | 2024339804 A1 | 10-10-2024 |
| | | | US | 2024340086 A1 | 10-10-2024 |
| US 2016306200 | A1 | 20-10-2016 | EP | 3081924 A1 | 19-10-2016 |
| | | | US | 2016306200 A1 | 20-10-2016 |
| | | | US | 2017235163 A1 | 17-08-2017 |
| US 11797873 | B2 | 24-10-2023 | AU | 2020433835 A1 | 29-09-2022 |
| | | | CA | 3174451 A1 | 10-09-2021 |
| | | | CN | 115516469 A | 23-12-2022 |
| | | | EP | 4115352 A1 | 11-01-2023 |
| | | | JP | 2023520127 A | 16-05-2023 |
| | | | KR | 20220149584 A | 08-11-2022 |
| | | | US | 2021272006 A1 | 02-09-2021 |
| | | | US | 2024127092 A1 | 18-04-2024 |
| US 10101600 | B2 | 16-10-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET ; LUCAS BEGUIN ; ADRIEN SIGNOLES ; THIERRY LAHAYE ; ANTOINE BROWAEYS ; GEORGES-OLIVIER REYMOND ; CHRISTOPHEJURCZAK**. Quantum computing with neutral atoms. *Quantum*, September 2020, vol. 4, ISSN 2521-327X, 327